# EUROPÄISCHE PATENTANMELDUNG

(11) **EP 1 174 840 A2**
(43) Veröffentlichungstag der Anmeldung: **23.01.2002**
(21) Anmeldenummer: 01116464.7
(22) Anmeldetag: 07.07.2001
(51) Int. Cl.: G08C 17/02

(54) **Drahtloses Steuerungssystem von mobile Geräte**

(30) Priorität: 22.07.2000 DE 10035824
(71) Anmelder: Sennheiser electronic GmbH & Co. KG, 30900 Wedemark (DE)
(72) Erfinder: Haupt, Axel, 30855 Langenhagen (DE)
(74) Vertreter: Eisenführ, Speiser & Partner

(57) **Zusammenfassung**

Die Erfindung betrifft ein System zur Steuerung von mobilen drahtlos mit einer Zentraleinheit (1) verbundenen Sende- und/oder Empfangsvorrichtungen (4, 5, 6, 7), wobei die Sende- und/oder Empfangsvorrichtungen (4, 5, 6, 7) zum Senden und/oder Empfangen von Daten und/oder Signalen in einem ersten Frequenzbereich ausgestaltet sind. Um bei einem solchen System eine zentrale Steuerung von mobilen in begrenzter Umgebung von der Zentraleinheit befindlichen Sende- und/oder Empfangsvorrichtungen auf einfache Weise zu ermöglichen, ist erfindungsgemäß vorgesehen, dass die Sende- und/oder Empfangsvorrichtungen (4, 5, 6, 7) und die Zentraleinheit (1) Mittel (31, 41, 51, 61, 71) zur bidirektionalen Kommunikation in einem zweiten Frequenzbereich zur Steuerung der Sende- und/oder Empfangsvorrichtungen (4, 5, 6, 7) aufweisen. Die Erfindung, die bevorzugt in einer begrenzten Umgebung wie einer Bühne, einem Filmstudio, einem Musikstudio oder einem Theater zur Steuerung mobiler Geräte wie Mikrofone, Lautsprecher oder Kameras eingesetzt werden kann, betrifft auch eine entsprechende Sende- und/- oder Empfangsvorrichtung, eine entsprechende Zentral- und Untereinheit und ein entsprechendes Steuerungsverfahren.

## Beschreibung

Die Erfindung betrifft ein System zur Steuerung von mobilen, drahtlos mit einer Zentraleinheit verbundenen Sende- und/oder Empfangsvorrichtungen, wobei die Sende- und/oder Empfangsvorrichtungen zum Senden und/oder Empfangen von Daten und/oder Signalen in einem ersten Frequenzbereich ausgestaltet sind. Außerdem betrifft die Erfindung eine entsprechende Sende- und/oder Empfangsvorrichtung, eine entsprechende Zentraleinheit und ein entsprechendes Verfahren zur Steuerung von mobilen, drahtlos mit einer Zentraleinheit verbundenen Sende- und/oder Empfangsvorrichtungen.

Bei drahtlosen Mikrofon- und Monitor-Anlagen ist es bekannt, die stationären Komponenten mit drahtgebundenen Computer-Schnittstellen auszustatten. Dadurch können die Betriebsparameter dieser Componenten über den Computer abgefragt und eingestellt werden. Eine Einbindung in die digitale Infrastruktur von Studios, Theatern und Bühnen ist so möglich. Schnelles Umkonfigurieren für Proben und alternative Aktivitäten sind dabei kein Problem, sondern werden besonders unterstützt und bei manchen Installationen sogar erst möglich gemacht.

Der mobile Teil dieser Anlagen, nämlich beispielsweise Sender bei drahtlosen Mikrofonen und Empfänger bei drahtlosen Monitoranlagen, konnte jedoch bislang nicht mit in diese Anbindung einbezogen werden. Zwar sind die internen Voraussetzungen einer Steuerung mittels Mikroprozessoren vorhanden, und es liegen auch die Betriebsparameter in geeigneter Form vor und können in geeigneter Weise eingestellt werden. Es fehlt jedoch eine geeignete Kommunikationsstrecke zwischen dem mobilen Gerät und einem externen Computer. Diese Kommunikationsstrecke muss drahtlos sein, da die Geräte auch im Einsatz angesprochen werden müssen, während sie von Akteuren getragen werden. Bislang erfolgt nur die Übertragung des Nutzsignals über eine Nutzsignal-Funkstrecke.

Ein Lösungsansatz bietet sich bei Systemen, die eine zentrale Synchronisierung benötigen, um im Mehrkanalbetrieb ein störungsfreies Miteinander vieler Sender zu gewährleisten: Die Synchronisierung wird über einen zentralen, stationären Sender durchgeführt, über den auch Steuerungsbefehle ausgestrahlt werden können. Die mobilen Sender benötigen in diesem Fall einen zusätzlichen Synchronisationsempfänger. Als Rückkanal vom mobilen Sender zum externen Computer kann die Betriebsfunkstrecke benutzt werden, indem zusätzliche Information mit aufmoduliert wird.

Dieser Lösungsansatz hat jedoch mehrere Nachteile, insbesondere bei herkömmlichen analogen Funkstrecken: Zunächst ist eine Synchronisierung dieser Systeme nicht erforderlich, da alle mobilen Sender auf einer anderen Frequenz, z. B. im UHF-Bereich arbeiten. Die Einrichtung einer "Synchronisationsfrequenz" erschwert das Frequenzmanagement und führt aufgrund der engen Nachbarschaft von Betriebsfunkfrequenz und Steuerfunkfrequenz zu Problemen im mobilen Sender. Entweder muß ein kompletter, paralleler Empfänger z. B. für den UHF-Bereich zusätzlich eingebaut werden, oder der Sender wechselt zeitweise in den Empfangsbetrieb, wobei dann eventuell trotzdem noch die Frequenz gewechselt werden muss. Abgesehen von Schwierigkeiten der technischen Realisierung werden das zu übertragene Audiosignal und andere Betriebsparameter des mobilen Senders negativ beeinflusst. Für digitale Audio-Übertragungssysteme gilt prinzipiell das gleiche, wenn jeder mobile Sender auf einer unterschiedlichen Frequenz arbeitet.

Der Erfindung liegt die Aufgabe zugrunde, das eingangs genannte System auf einfache und kostengünstige Weise so auszugestalten, dass die mobilen Geräte, das heißt die mobilen Sende- und/oder Empfangsvorrichtungen, zentral von der Zentraleinheit drahtlos und mit einfachen Mitteln gesteuert werden können. Außerdem sollen entsprechende Sende- und/oder Empfangsvorrichtungen, eine entsprechende Zentraleinheit und ein entsprechendes Steuerungsverfahren angegeben werden.

Diese Aufgabe wird erfindungsgemäß ausgehend von dem eingangs genannten System dadurch gelöst, dass die Sende- und/oder Empfangsvorrichtungen und die Zentraleinheit Mittel zur bidirektionalen Kommunikation in einem zweiten Frequenzbereich zur Steuerung der Sende- und/oder Empfangsvorrichtung aufweisen.

Grundgedanke ist dabei, die mobilen Geräte mit einer zusätzlichen, bidirektionalen drahtlosen Kommunikationsstrecke für die Übertragung von Steuersignalen auszurüsten, die unabhängig von der Nutzsignal-Funkstrecke ist, und damit den Weg zur Anbindung dieser Komponenten an eine übergeordnete Infrastruktur, z. B. den Steuercomputer der Zentraleinheit zu bereiten. Damit können den mobilen Geräten und dem gesamten System neue Funktionalitäten erschlossen werden. Dieser allgemeine Ansatz bedeutet, dass die mobilen Geräte zusätzlich beispielsweise mit einem Transceiver-Modul für Sende- und/oder Empfangsbetrieb für die Übertragung von Steuersignalen ausgestattet werden. Die Frequenz der Kommunikationsstrecke sollte dabei möglichst weit von der Frequenz der Betriebsfunkstrecke, über die die eigentlichen Nutzdaten übertragen werden, entfernt sein, um gegenseitige Störungen zu vermeiden.

Bei der Auswahl der Mittel zur bidirektionalen Kommunikation sollten insbesondere auch folgende Anforderungen an die Kommunikationsstrecke berücksichtigt werden:
- Unabhängigkeit von der Betriebsfunkstrecke,
- äußerst geringer Platz- und Energiebedarf im mobilen Gerät,
- selektive Adressierung der mobilen Geräte,
- sehr guter Fehlerschutz gegen Verfälschung von gesendeten und empfangenen Daten und
- sehr preiswerte Realisierung.

Ein geeignetes Beispiel für die Mittel zur bidirektionalen Kommunikation sind Transceiver-Module, z. B. sogenannte "Bluetooth"-Module aus dem Bereich der Mobilkommunikation oder elektronische Kennzeichnungs-Tags aus dem Bereich der Warenwirtschaft. Beide Varianten können die vorstehend genannten Anforderungen gut erfüllen. Am Beispiel der "Bluetooth"-Module sei dies aufgezeigt:
- Die Module stellen eine komplett integrierte Ein-Chip-Lösung für eine bidirektionale Datenübertragung dar, die darauf hin entwickelt sind, mit sehr geringem Energieverbrauch zu arbeiten. Der Platzbedarf ist sehr gering.
- Durch ausgefeilte Authentifizierungs-Algorithmen wird sichergestellt, dass nur Sender und Empfänger miteinander kommunizieren, die auch miteinander kommunizieren sollen.
- Die Übertragung von Daten ist grundsätzlich bidirektional.
- Neben den im Standard verankerten Fehlerschutz-Mechanismen können weitere Mechanismen in den Datenstrom aufgenommen werden.
- Durch eine Reichweite mit einem Radius von ca. 10m, in besonderer Ausführung auch 100m, ist es nicht notwendig, sich dem mobilen, zu steuernden Gerät unmittelbar zu nähern.
- Eine Beeinflussung im Nutzsignal-Frequenzbereich (UHF) findet nicht statt, da in einem völlig anderen Frequenzbereich (2,4 GHz) gearbeitet wird.

Für den Nutzfrequenzbereich stehen im wesentlichen die Bereiche 450-980 MHz (UHF-Band), 1,785-1,8 GHz und 2,4-2,48 MHz (ISM-Band) zur Verfügung. Für die Übertragung von Steuerinformationen können z. B. die Frequenzbereiche 0,1-5 MHz (induktiv), 433-434,7 MHz (ISM-Band), 865-868 MHz und 2,4-2,48 MHz (ISM-Band) benutzt werden. Unter dem Blickwinkel, daß Nutzfrequenzbereich und Steuerfrequenzbereich möglichst weit auseinander liegen sollten, gibt es somit genügend Kombinationsmöglichkeiten, um ein erfindungsgemäßes System zu betreiben. Beispielhaft für eine Kombination Nutz-/Steuerfrequenzbereich wäre z. B. 480-980 MHz/2,4-2,48 GHz oder 2,4-2,48 GHz/433-434,7 MHz.

Vorteilhafte Ausgestaltungen und Weiterbildungen des erfindungsgemäßen Systems sind in den Unteransprüchen angegeben. Bevorzugt werden die Sende- und/oder Empfangsvorrichtungen eingesetzt in mobilen Geräten, mit denen Audio- und/oder Videodaten gesendet und/oder empfangen werden, wie beispielsweise in Mikrofonen, Lautsprechern, Monitor-Anlagen oder Kameras. Die Erfindung eignet sich bevorzugt zum Einsatz in einer begrenzten Umgebung, wenn also mobile Geräte in einer begrenzten Umgebung von der Zentraleinheit zentral gesteuert werden sollen, wie beispielsweise auf einer Theater-/Musik-Bühne, einem Fernsehstudio, einem Musikproduktionsstudio oder einem Filmproduktionsort oder einem Veranstaltungsort.

Die Erfindung betrifft auch eine Sende- und/oder Empfangsvorrichtung gemäß Anspruch 17, eine Einheit gemäß Anspruch 19 und ein Verfahren gemäß Anspruch 21, die in gleicher oder entsprechender Weise wie das erfindungsgemäße System und wie in den auf Anspruch 1 rückbezogenen Ansprüchen dargelegt ist, weitergebildet und ausgestaltet sein können.

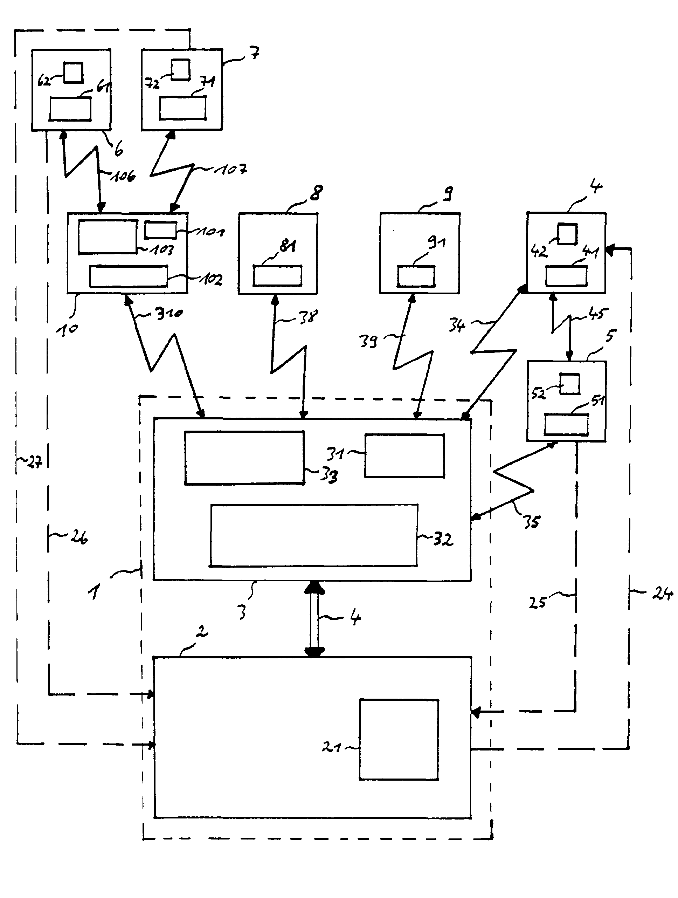

Die Erfindung wird nachfolgend anhand der Figur näher erläutert, die ein Blockschaltbild eines erfindungsgemäßen Systems zeigt. Dabei weist die Zentraleinheit 1 eine zentrale stationäre Steuerungs- und Verarbeitungseinheit 2 und eine Steuerungs- und Kommunikationseinheit 3 auf, die über eine Leitung 4 miteinander verbunden sind. In einer begrenzten Umgebung von der Zentraleinheit 1 befinden sich mehrere als Sende- und/oder Empfangsvorrichtungen ausgestaltete mobile Geräte 4 bis 9, die teilweise an die Zentraleinheit 1 Daten und/oder Signale übertragen (Geräte 5, 6, 7) bzw. von der Zentraleinheit 1 Daten und/oder Signale empfangen (Gerät 4) und die von der Zentraleinheit 1 direkt oder indirekt gesteuert werden. Als mobile Geräte sind hier beispielhaft gezeigt: eine z. B. im Ohr anordbare Monitor-Anlage 4 (z. B. ein kleiner Lautsprecher), ein Mikrofon 5, ein weiteres Mikrofon 6, eine Videokamera 7, ein Bühnenelement 8 und eine Lichtanlage 9.

Die stationäre Steuerungseinrichtung 2 weist ein Sende- und Empfangsmodul 21 auf, mit der Daten und/oder Signale (Nutzsignale) über eine Funkstrecke an einzelne mobile Geräte gesendet und/oder von einzelnen mobilen Geräte empfangen werden können. Dazu weisen die mobilen Geräte entsprechende Sende- und/oder Empfangsmodule auf: Die Monitor-Anlage 4 weist ein Empfangsmodul 42 auf, die Mikrofone 5, 6 und die Videokamera 7 weisen Empfangsmodule 52, 62, 72 auf. Diese Sende- und/oder Empfangsmodule sind drahtlos über die Funkverbindungen 24, 25, 26, 27 mit dem Sende-/Empfangsmodul 21 der Steuerungseinheit 2 verbunden, so dass in einem ersten Frequenzbereich Nutz-Daten oder -Signale über diese Verbindungen übertragen werden können. Für die Erfindung ist der für die Übertragung verwendete Frequenzbereich und die Art der Datenübertragung - digital oder analog - nicht wesentlich.

Damit die mobilen Geräte 4 bis 9 von der Zentraleinheit 1 zentral gesteuert werden können, weisen sowohl die Steuerungseinheit 3 als auch die mobilen Geräte 4 bis 9 jeweils ein mit Sende-und/oder Empfangsfunktionalität ausgestattetes Steuermodul 31, 41, 51, 61, 71, 81, 91 zur direkten oder indirekten bidirektionalen Kommunikation miteinander auf. Dazu bestehen zwischen den mobilen Geräten 4, 5, 8, 9 und der Steuerungseinheit 3 bidirektionale Kommunikationsstrecken 34, 35, 38, 39, über die insbesondere Steuerungsbefehle an die mobilen Geräte 4, 5, 8, 9 übertragen und Betriebsparameter an die Steuerungseinheit 3 übertragen werden können. Damit aktuelle Betriebsparameter auch angezeigt und verändert werden können, weist die Steuerungseinheit 3 insbesondere auch eine Bedieneinheit 32 und eine Anzeigeeinheit 33 auf.

Zur Steuerung der mobilen Geräte 6, 7 kann auch eine als Untereinheit der Zentraleinheit 1 dienende mobile Steuerungseinheit 10 vorgesehen sein, die im wesentlichen ausgestaltet ist wie die stationäre Steuerungseinheit 3, nämlich ein Steuermodul 101, eine Bedieneinheit 102 und eine Anzeigeeinheit 103 aufweist. Zwischen der bevorzugt stationären Steuerungseinheit 3 und der mobilen Steuerungseinheit 10 besteht eine bidirektionale Kommunikationsverbindung 310 und zwischen der mobilen Steuerungseinheit 10 und den mobilen Geräten 6, 7 bestehen bidirektionale Kommunikationsverbindungen 106, 107, so dass die mobilen Geräte 6, 7 indirekt von der Steuerungseinheit 3 über die mobile Steuerungseinheit 10 gesteuert werden. Die Steuerung kann aber auch gänzlich von der mobilen Steuerungseinheit 10 aus erfolgen, die dann jeweils an die stationäre Steuerungseinheit 3 über die Kommunikationsstrecke 310 die aktuellen Betriebsparameter und Einstellungen weiterreicht.

Die Steuerung über die bidirektionalen Kommunikationsstrecken erfolgt in einem zweiten Frequenzbereich, der sich bevorzugt von dem ersten Frequenzbereich deutlich unterscheidet, über den die Nutzsignalübertragung zwischen Zentraleinheit und einzelnen mobilen Geräten erfolgt. Es kann auch vorgesehen sein, dass für einzelne oder für jedes mobile Gerät eine gesonderte Kommunikationsfrequenz vorgesehen ist oder dass mittels geeigneter Authentifizierungs-Algorithmen sichergestellt wird, dass nur diejenigen Geräte miteinander kommunizieren, für die das auch gewollt ist.

Sowohl die Steuerungseinheit 3 als auch die Steuerungseinheit 10 können mobil z. B. als Laptop, PDA oder Palm-PC ausgestaltet sein.

Einige weitere vorteilhafte Aspekte der Erfindung seien nachfolgend beispielshaft für drahtlose Mikrofon- oder im Ohr befindliche Monitor-Anlagen aufgeführt.

Die mobilen Geräte können vollständig ohne Bedienungselemente konstruiert werden. Selbst auf den Ein-/Ausschalter kann verzichtet werden, wenn das Gerät über einen Standby-Modus verfügt, in dem es einen vernachlässigbaren Energieverbrauch hat. Bei Wegfall der Bedienungselemente sind zudem keine Gehäusedurchbrüche mehr notwendig, so dass das Gerät hermetisch dicht gegen Feuchtigkeit, Schweiss und Staub konstruiert werden kann.

Über die Steuerungseinheit können alle Betriebsparameter der mobilen Geräte abgefragt, angzeigt und eingestellt werden. Dies können z. B. sein: Betriebszustände, Betriebsfrequenzen, Mikrofonempfindlichkeit, diverse interne Pegel und Schaltzustände, Batteriezustand, Auswahl von Kompandersystemen, Modell- und Herstelldaten oder Diagnosedaten. Mit Hilfe einer geeigneten Software können diese Daten für alle im Funkbereich befindlichen Geräte angezeigt und bei Bedarf manuell oder automatisch verändert werden. Die Kopplung der Steuerungseinheit mit den zugehörigen stationären Geräten wir Empfängern oder Sendern (Verarbeitungseinheit 2) ermöglicht eine automatische Paarung der Geräte hinsichtlich ihrer Betriebsparameter. Wird die Steuerungseinheit mit der in Studios, Theatern usw. vorhandenen Computer-Infrastruktur gekoppelt, so ist eine übergeordnete Verwaltung, Auswahl und Steuerung der Betriebsparameter der drahtlosen Übertragungsstrekken möglich. Die gesamte Planung und Konfiguration der Übertragungsstrecken kann ohne die eigentlichen Geräte durchgeführt werden. Nach erfolgter Installation werden alle notwendigen Daten für die aktuell abzulaufende Produktion in die jeweiligen Geräte geladen.

Insbesondere tragbare, kleine als Untereinheiten verwendete mobile Steuerungseinheiten eröffnen ein weites Feld. Sie können auf der einen Seite eingesetzt werden als einfaches Bediengerät, wobei sich dann der Bediener dem mobilen Gerät nur auf wenige Meter zu nähern braucht, um die Kommunikation aufzunehmen. Eine komfortable Bedienoberfläche, wie sie schon aufgrund der Größe der Anzeige im eigentlichen Gerät nicht zu realisieren wäre, dient der Visualisierung und Manipulation von Parametern. Auf der anderen Seite können sie aber auch das komplette Management einer Installation halb- oder vollautomatisch übernehmen. Hier eröffnet sich ein Ausweg aus der Problematik der immer kleiner werdenden Anzeigen und Bedienungen der Geräte aufgrund fortschreitender Miniaturisierung.

Abgesetzte Untereinheiten 10 können bei stationärer Montage an geeigneter Stelle zur automatischen Anzeige der Betriebsparameter dienen, sobald sich ein mobiler Sender oder Empfänger der Station nähert. Bei Lagerung der mobilen Geräte im Funkbereich der Untereinheit ist so ein ständiger Überblick über die Betriebsparameter auf der Anzeige der Untereinheit möglich, oder man erfährt die Betriebsparameter im Vorbeigehen.

Auch die starren Frequenzzuweisungen zu den Geräten können wegfallen. Die mobilen Sender oder Empfänger benötigen kein internes permanentes Gedächtnis für die Betriebsparameter mehr. Unmittelbar vor dem Einsatz werden sie auf die aktuell geforderten Betriebsparameter programmiert. Dadurch ist es möglich, das Handling der Betriebsfrequenzen flexibler zu gestalten. Einerseits werden für die komplette Produktion nur so viele Frequenzen benötigt, wie drahtlose Strecken gleichzeitig in Betrieb sind, andererseits kann manuell oder automatisch auf eine Ersatzfrequenz umgeschaltet werden, wenn die vorgesehene Frequenz gestört ist.

Durch den Aufbau von sogenannten "Funkschleusen", die als Eingangsschleuse dienen und durch die ein Akteur hindurch muss, wenn er zur Bühne geht oder von dort zurückkommt, ist es möglich, die mobilen Geräte gezielt in den aktiven oder Standby-Modus zu schalten. Einerseits kann der Akteur so nicht aus Versehen mit abgeschaltetem oder falsch eingestelltem Gerät auf die Bühne gehen, da alle Parameter in der Funkschleuse überprüft und gegebenenfalls korrigiert werden. Andererseits werden die mobilen Geräte bei Verlassen der Bühne abgeschaltet, um Batterieenergie zu sparen und dem Akteur die Möglichkeit zu geben, sich zwanglos hinter der Bühne zu bewegen.

Da die Steuermodule einen bidirektionalen Kommunikationsbetrieb ermöglichen, können die mobilen Geräte auch untereinander kommunizieren, wie es in der Figur zwischen den Geräten 4 und 5 mit der Kommunikationsstrecke 45 vorgesehen ist. So ist es möglich, dass sich die Geräte automatisch selbst organisieren, z. B. hinsichtlich der Betriebsfrequenzen, und dabei Rücksicht nehmen auf die Fähigkeiten der einzelnen Geräte. Mobile Anlagen, insbesondere mit wenigen Übertragungsstrecken, können so schnell und einfach in Betrieb genommen werden.

Sehr vorteilhaft können die erfindungsgemäß vorgesehenen Kommunikationsstrecken im Falle eines Software-Updates von Geräten beim Kunden sein. Im einfachsten Fall wird die neue Software von einem Speichermedium der Steuerungseinheit in die mobilen Geräte geladen. Die Steuerungseinheit erlangt die entsprechenden Dateien z. B. per Diskette oder Internet vom Hersteller. Ein weiterer Weg ist die Steuerung und Durchführung dieses Vorgangs direkt vom Hersteller aus durch Fernsteuerung der Steuerungseinheit direkt vor Ort beim Kunden. Dadurch ist der Hersteller in der Lage, die Geräte, bei denen ein Update durchgeführt wurde, eindeutig anhand von Herstellcodes zu identifizieren.

Die Geräte gewinnen dadurch auch an Flexibilität hinsichtlich der Software. Der Wunsch, die mobilen Geräte möglichst klein und energiesparend zu entwickeln, zwingt dazu, mit der Menge des Programmspeichers zu haushalten. Es wird daher, insbesondere bei zukünftigen voll digitalisierten Geräten, nicht möglich oder sinnvoll sein, verschiedene komplexe Signalbeeinflussungalgorithmen im Gerät vorzuhalten. Mit einer komfortablen Programmier-Schnittstelle kann das Gerät beim Kunden je nach Einsatzfall mit der gewünschten Software ausgestattet werden. Es ist sogar möglich, bei Problemen vor Ort vom Hersteller speziell modifizierte Software sofort beim Kunden zum Einsatz zu bringen.

Eine ähnliche Form der drahtlosen Steuerung und Konfiguration wie in dem beschriebenen Bereich des Studios, Theaters und Bühnenbetriebs ist auch für weitere Geräte denkbar, die dort zum Einsatz kommen. So können z. B. Beleuchtungseinrichtungen in dieser Form in eine übergeordnete, drahtlose Steuerung eingebunden werden, ebenso wie Aktoren für Bühnenbild und Dekoration. Auch andere Anwendungen der Erfindung zur Steuerung mobiler Geräte in einer begrenzten Umgebung sind denkbar. Dies ist in der Figur am Beispiel eines Bühnenelements 8 und eine Lichtanlage 9 gezeigt, die jeweils mit einem Steuermodul 81, 91 ausgestaltet sind und somit über die Kommunikationsstrecken 38, 39 zentral von der Steuerungseinheit 3 gesteuert werden können.

## Patentansprüche

1. System zur Steuerung von mobilen drahtlos mit einer Zentraleinheit verbundenen Sende- und/oder Empfangsvorrichtungen, wobei die Sende- und/oder Empfangsvorrichtungen zum Senden und/oder Empfangen von Daten und/oder Signalen in einem ersten Frequenzbereich ausgestaltet sind,
**dadurch gekennzeichnet, dass** die Sende-und/oder Empfangsvorrichtungen und die Zentraleinheit Mittel zur bidirektionalen Kommunikation in einem zweiten Frequenzbereich zur Steuerung der Sende- und/oder Empfangsvorrichtungen aufweisen.

2. System nach Anspruch 1,
**dadurch gekennzeichnet, dass** der erste und der zweite Frequenzbereich sich nicht überschneiden.

3. System nach einem der vorhergehenden Ansprüche,
**dadurch gekennzeichnet, dass** die Sende- und/oder Empfangsvorrichtungen und die Zentraleinheit zum Senden und/oder Empfangen von Audio- und/oder Videodaten im ersten Frequenzbereich ausgestaltet sind.

4. System nach Anspruch 3,
**dadurch gekennzeichnet, dass** die Sende- und/oder Empfangsvorrichtungen zum Senden und/oder Empfangen von Daten als mobile Geräte, insbesondere als Mikrofon, Lautsprecher, Audio- und/oder Videoüberwachungseinrichtung und/oder Kamera ausgestaltet sind.

5. System nach einem der vorhergehenden Ansprüche,
**dadurch gekennzeichnet, dass** die Zentraleinheit ausgestaltet ist zur kompletten Steuerung und Bedienung von Sende- und/oder Empfangsvorrichtungen.

6. System nach einem der vorhergehenden Ansprüche,
**dadurch gekennzeichnet, dass** die Zentraleinheit ausgestaltet ist zur Einstellung der Betriebsparameter einzelner oder aller Sende- und/oder Empfangsvorrichtungen.

7. System nach einem der vorhergehenden Ansprüche,
**dadurch gekennzeichnet, dass** die Zentraleinheit ausgestaltet ist zur Anzeige der aktuellen Einstellung von Betriebsparametern einzelner oder aller Sende- und/oder Empfangsvorrichtungen.

8. System nach einem der vorhergehenden Ansprüche,
**dadurch gekennzeichnet, dass** mindestens eine mobile drahtlos mit der Zentraleinheit verbundene Untereinheit zur Steuerung einzelner Sende- und/oder Empfangsvorrichtungen vorgesehen ist.

9. System nach einem der vorhergehenden Ansprüche,
**dadurch gekennzeichnet, dass** mindestens eine autarke Untereinheit zur Steuerung einzelner Sende- und Empfangsvorrichtungen vorgesehen ist, die Funktionalitäten der Zentraleinheit ganz oder teilweise nachbildet.

10. System nach einem der vorhergehenden Ansprüche,
**dadurch gekennzeichnet, dass** für einzelne oder jede Sende- und/oder Empfangsvorrichtung im zweiten Frequenzbereich eine separate Frequenz für die bidirektionale Kommunikation mit der Zentraleinheit vorgesehen ist.

11. System nach einem der vorhergehenden Ansprüche,
**dadurch gekennzeichnet, dass** die Zentraleinheit ausgestaltet ist zur Programmierung der Sende- und/oder Empfangsvorrichtungen mit den benötigten Betriebsparametern unmittelbar vor deren Einsatz.

12. System nach einem der vorhergehenden Ansprüche,
**dadurch gekennzeichnet, dass** die Sende- und/oder Empfangsvorrichtungen zur Kommunikation untereinander ausgestaltet sind.

13. System nach einem der vorhergehenden Ansprüche,
**dadurch gekennzeichnet, dass** die Zentraleinheit oder eine ggf. vorgesehene Untereinheit und die Sende- und/oder Empfangsvorrichtungen eine Programmier-schnittstelle aufweisen zum Laden neuer Software in die Sende- und/oder Empfangsvorrichtungen über die bidirektionale Kommunikationsstrecke in dem zweiten Frequenzbereich.

14. System nach einem der vorhergehenden Ansprüche,
**dadurch gekennzeichnet, dass** das System zur Steuerung von Sende- und/oder Empfangsvorrichtungen in einer begrenzten Umgebung, insbesondere in einem Studio, einem Theater oder einem Bühnenbereich, eingesetzt wird.

15. System nach Anspruch 14,
**dadurch gekennzeichnet, dass** die begrenzte Umgebung eine Eingangsschleuse für die Sende- und/oder Empfangsvorrichtungen aufweist zur Überprüfung und/oder Einstellung der Betriebsparameter der Sende- und/oder Empfangsvorrichtungen beim Einbringen in oder Ausbringen aus der begrenzten Umgebung.

16. System nach Anspruch 14 oder 15,
**dadurch gekennzeichnet, dass** weitere in der begrenzten Umgebung befindliche Elemente, insbesondere Beleuchtungseinrichtungen oder Bühnenelemente Mittel zur bidirektionalen Kommunikation in dem zweiten Frequenzbereich zur Steuerung durch die Zentraleinheit aufweisen.

17. Sende- und/oder Empfangsvorrichtung zum Senden und/oder Empfangen von Daten und/oder Signalen an eine Zentraleinheit über eine Funkstrecke in einem ersten Frequenzbereich,
**dadurch gekennzeichnet, dass** Mittel zur bidirektionalen Kommunikation in einem zweiten Frequenzbereich zur Steuerung der Sende- und/oder Empfangsvorrichtungen durch die Zentraleinheit vorgesehen sind.

18. Sende- und/oder Empfangsvorrichtung nach Anspruch 17,
**dadurch gekennzeichnet, dass** die Sende- und/oder Empfangsvorrichtung zum Senden und/oder Empfangen von Audio- und/oder Videodaten und als mobiles Gerät, insbesondere als Mikrofon, Lautsprecher, Überwachungseinrichtung oder Kamera ausgestaltet ist.

19. Einheit, insbesondere Zentraleinheit oder Untereinheit, für ein System nach einem der Ansprüche 1 bis 16 mit Mitteln zur drahtlosen Verbindung mit Sende- und/oder Empfangsvorrichtungen zum Senden und/oder Empfangen von Daten und/oder Signalen in einem ersten Frequenzbereich,
**dadurch gekennzeichnet, dass** Mittel zur bidirektionalen Kommunikation in einem zweiten Frequenzbereich zur Steuerung der Sende- und/oder Empfangsvorrichtungen vorgesehen sind.

20. Einheit nach Anspruch 19,
**dadurch gekennzeichnet, dass** die Mittel zur bidirektionalen Kommunikation in einer mobilen Einheit, insbesondere einem Laptop, PDA oder Palmcomputer, angeordnet sind.

21. Verfahren zur Steuerung von mobilen drahtlos mit einer Zentraleinheit verbundenen Sende- und/oder Empfangsvorrichtungen, wobei die Sende- und/oder Empfangsvorrichtungen zum Senden und/oder Empfangen von Daten und/oder Signalen in einem ersten Frequenzbereich ausgestaltet sind,
**dadurch gekennzeichnet, dass** die Steuerung der Sende- und/oder Empfangsvorrichtungen über eine bidirektionale Kommunikationsstrecke in einem zweiten Frequenzbereich zwischen Sende- und/oder Empfangsvorrichtungen und Zentraleinheit erfolgt.
